# EUROPEAN PATENT SPECIFICATION

(11) **EP 4 113 935 B1**
(45) Date of publication and mention of the grant of the patent: **21.10.2026**
(21) Application number: 21774866.4
(22) Date of filing: 09.02.2021
(51) Int. Cl.: G06F 8/61, H04L 67/125, H04L 67/289, G06F 11/30, H04L 67/51, H04L 67/00

(54) **METHOD AND APPARATUS FOR TRANSMITTING MOBILE EDGE COMPUTING APPLICATION**
VERFAHREN UND VORRICHTUNG ZUR ÜBERTRAGUNG EINER MOBILEN EDGE-COMPUTING-ANWENDUNG
PROCÉDÉ ET APPAREIL DE TRANSMISSION D'APPLICATION INFORMATIQUE EN PÉRIPHÉRIE MOBILE

(30) Priority: 25.03.2020 KR 20200036440
(43) Date of publication of application: 04.01.2023
(73) Proprietor: Samsung Electronics Co., Ltd., Suwon-si, Gyeonggi-do 16677 (KR)
(72) Inventor: KIM, Heejung, Suwon-si, Gyeonggi-do 16677 (KR); YOON, Changbae, Suwon-si, Gyeonggi-do 16677 (KR); CHO, Chihyun, Suwon-si, Gyeonggi-do 16677 (KR)
(74) Representative: HGF
(86) International application number: PCT/KR2021/001724
(87) International publication number: WO 2021/194087

(56) References cited:
- US-A1- 2016 232 026
- US-A1- 2018 183 855
- US-A1- 2019 045 409
- US-A1- 2019 045 409
- US-A1- 2019 108 052
- MACH PAVEL ET AL: "Mobile Edge Computing: A Survey on Architecture and Computation Offloading", vol. 19, no. 3, 1 January 2017 (2017-01-01), pages 1628 - 1656, XP055895691, Retrieved from the Internet <URL:https://ieeexplore.ieee.org/stampPDF/getPDF.jsp?tp=&arnumber=7879258&ref=aHR0cHM6Ly9pZWVleHBsb3JlLmllZWUub3JnL2RvY3VtZW50Lzc4NzkyNTg=> DOI: 10.1109/COMST.2017.2682318
- SABELLA DARIO; VAILLANT ALESSANDRO; KUURE PEKKA; RAUSCHENBACH UWE; GIUST FABIO: "Mobile-Edge Computing Architecture: The role of MEC in the Internet of Things.", IEEE CONSUMER ELECTRONICS MAGAZINE, vol. 5, no. 4, 1 October 2016 (2016-10-01), Piscataway, NJ, USA, pages 84 - 91, XP011623860, ISSN: 2162-2248, DOI: 10.1109/MCE.2016.2590118
- CHILUKURI SHANTI; BOLLAPRAGADA SOURABH; KOMMINENI SAINATH; C. KALYANA CHAKRAVARTHY: "RainCloud - Cloudlet Selection for Effective Cyber Foraging", 2017 IEEE WIRELESS COMMUNICATIONS AND NETWORKING CONFERENCE (WCNC), 19 March 2017 (2017-03-19), pages 1 - 6, XP033095658, DOI: 10.1109/WCNC.2017.7925614

## Description

### TECHNICAL FIELD

The disclosure relates to a method and apparatus for transmitting a mobile edge computing (for example, multi-access or mobile edge computing (MEC)) application.

### BACKGROUND ART

Recently, an edge computing technology of transmitting data by using an edge server has been developed. The edge computing technology may include, for example, multi-access edge computing (MEC) or fog computing (FOC). The edge computing technology is a technology of providing data to an electronic device through a separate server (hereinafter, referred to as an edge server, an MEC server, or an MEC host) provided at a location geographically close to the electronic device, for example, inside a base station or near the base station. For example, an application requiring a low delay time (latency) among at least one application provided in the electronic device may transmit or receive data through an edge server provided at a geographically close location, without passing through a server located in an external data network (DN) (for example, the Internet).

Recently, a service (hereinafter, referred to as an MEC-based service or an MEC service) using the edge computing technology has been proposed. With the progress in studies and development for supporting the MEC-based service, a method of selecting an optimum MEC host to provide a high-quality MEC service to a user has been introduced.

US 2018/183855 discloses application computation offloading for mobile edge computing . US 2019/045409 discloses a method and apparatus for implementing mobile edge application session connectivity and mobility.

### DESCRIPTION OF EMBODIMENTS

### SOLUTION TO PROBLEM

There is provided an electronic device for determining a mobile edge computing, MEC, host in accordance with claim 1; a method, performed by an electronic device, of transmitting a mobile edge application to a determined mobile edge computing host, in accordance with claim 7; and a computer-readable recording medium having recorded thereon a program for executing a method, performed by an electronic device of transmitting a mobile edge application to a determined mobile edge computing host, in accordance with claim 13.

### BRIEF DESCRIPTION OF DRAWINGS

FIG. 1 is a diagram for schematically describing a network environment supporting a mobile edge computing (MEC)-based service, according to an embodiment of the disclosure.
FIG. 2 is a diagram showing a network environment supporting an MEC-based service based on a terminal, according to an embodiment of the disclosure.
FIG. 3 is a diagram showing a network environment supporting an MEC-based service based on an MEC server, according to an embodiment of the disclosure.
FIG. 4 is a diagram showing a network environment supporting an MEC-based service, according to another embodiment of the disclosure.
FIG. 5 is a diagram showing a network environment supporting an MEC-based service by determining a suitable MEC host, according to an embodiment of the disclosure.
FIG. 6 is a diagram showing procedures for supporting an MEC-based service by determining a suitable MEC host, according to an embodiment of the disclosure.
FIG. 7 is a flowchart for describing operations in which an electronic device determines a suitable MEC host, according to an embodiment of the disclosure.
FIG. 8 is a flowchart for describing operations in which an electronic device determines a suitable MEC host, according to another embodiment of the disclosure.
FIG. 9 is a flowchart for describing operations in which an electronic device determines a suitable MEC host, according to another embodiment of the disclosure.
FIG. 10 is a flowchart for describing operations in which an electronic device determines a suitable MEC host, according to another embodiment of the disclosure.
FIG. 11 is a flowchart for describing operations in which an electronic device determines a suitable MEC host, according to another embodiment of the disclosure.
FIG. 12 is a flowchart for describing operations in which an electronic device retransmits a transmitted new mobile edge (ME) application (app), according to an embodiment of the disclosure.
FIG. 13 is a block diagram of an electronic device according to an embodiment of the disclosure.

### BEST MODE

The invention is defined by the independent claims. Further embodiments of the invention are defined by the dependent claims. Although the invention is only defined by the claims, the below embodiments, examples and aspects are present for aiding in understanding the background and advantages of the invention.

### MODE OF DISCLOSURE

Hereinafter, embodiments of the disclosure will be described with reference to accompanying drawings.

In describing the embodiments, descriptions of technical contents that are well known in the technical field to which the disclosure belongs and are not directly related to the disclosure will be omitted. By omitting the unnecessary description, the gist of the disclosure may be more clearly conveyed without obscuring the subject matter.

For the same reasons, components may be exaggerated, omitted, or schematically illustrated in drawings for clarity. Also, the size of each component does not completely reflect the actual size. In the drawings, like reference numerals denote like elements.

Advantages and features of the disclosure and methods of accomplishing the same may be understood more readily by reference to the following detailed description of the embodiments and the accompanying drawings. In this regard, the embodiments of the disclosure may have different forms and should not be construed as being limited to the descriptions set forth herein. Rather, these embodiments of the disclosure are provided so that this disclosure will be thorough and complete and will fully convey the concept of the present embodiments of the disclosure to one of ordinary skill in the art, and the disclosure will only be defined by the appended claims. Throughout the specification, like reference numerals denote like elements.

Here, it will be understood that combinations of blocks in flowcharts or process flow diagrams may be performed by computer program instructions. Because these computer program instructions may be loaded into a processor of a general-purpose computer, special purpose computer, or other programmable data processing apparatus, the instructions, which are executed via the processor of the computer or other programmable data processing apparatus generate means for implementing the functions specified in the flowchart block(s).

The computer program instructions may be stored in a computer-executable or computer-readable memory capable of directing a computer or another programmable data processing apparatus to implement a function in a particular manner, and thus the instructions stored in the computer-executable or computer-readable memory may also be capable of producing manufacturing items containing instruction units for performing the functions described in the flowchart block(s).

The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks shown in succession may in fact be executed substantially concurrently or the blocks may sometimes be executed in the reverse order, depending upon the functionality involved.

Here, the term "unit" used in the embodiments means a software component or hardware component such as a field-programmable gate array (FPGA) or an application-specific integrated circuit (ASIC), and performs a specific function. However, the term "unit" is not limited to software or hardware. The "unit" may be formed so as to be in an addressable storage medium, or may be formed so as to operate one or more processors.

Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables.

A function provided by the components and "units" may be associated with the smaller number of components and "units", or may be divided into additional components and "units". Furthermore, the components and "units" may be embodied to reproduce one or more central processing units (CPUs) in a device or security multimedia card. Also, in the embodiments, the "unit" may include at least one processor.

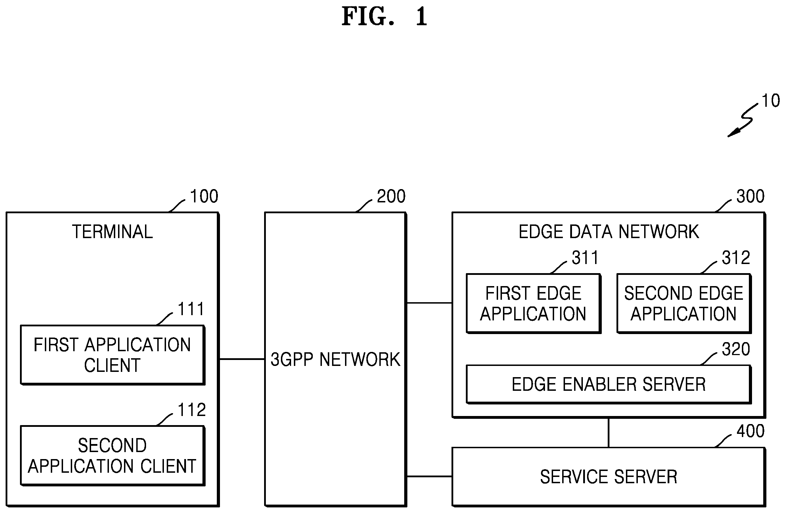

FIG. 1 is a diagram for schematically describing a network environment supporting a mobile edge computing (MEC)-based service, according to an embodiment of the disclosure.

Referring to FIG. 1, a network environment 10 may include a terminal 100, a 3rd generation partnership project (3GPP) network 200, an edge data network 300, and a service server 400. However, components included in the network environment 10 is not limited thereto.

According to an embodiment, each of the components included in the network environment 10 may denote a physical entity unit or denote a software or module unit capable of performing an individual function. Accordingly, the component included in the network environment 10 may be referred to as an entity or a function.

According to an embodiment, the terminal 100 may denote an apparatus used by a user. For example, the terminal 100 may denote a user equipment (UE), a remote terminal, a wireless terminal, or a user device. Also, the terminal 100 may include any type of device.

According to an embodiment, the terminal 100 may drive (or execute) a plurality of application clients. For example, the terminal 100 may include a first application client 111 and a second application client 112. The plurality of application clients may require different network services based on at least one of a data rate of the terminal 100, a delay time (or a speed) (latency), reliability, the number of terminals 100 accessing a network, a network accessing cycle of the terminal 100, or average data usage. The different network services may include, for example, enhanced mobile broadband (eMBB), ultra-reliable and low latency communication (URLLC), or massive machine type communication (mMTC).

An application client of the terminal 100 may denote a basic application pre-installed in the terminal 100 or an application provided by a third party. In other words, the application client may denote a client application program driven in the terminal 100 for a particular application service. Several application clients may be driven in the terminal 100. At least one of the application clients may be used to provide a service from the edge data network 300 to the terminal 100. For example, the application client is an application installed in and executed by the terminal 100, and may provide a function of transmitting or receiving data through the edge data network 300. The application client of the terminal 100 may denote application software (or a module) executed on the terminal 100 so as to use a function provided by at least one particular edge application.

According to an embodiment, the first and second application clients 111 and 112 of the terminal 100 may perform data transmission with the service server 400 based on a required network service type or perform edge computing-based data transmission with the edge data network 300. For example, when the first application client 111 does not require low latency, the first application client 111 may perform data transmission with the service server 400. As another example, when the second application client 112 requires low latency, the second application client 112 may perform MEC-based data transmission with the edge data network 300. Obviously, the disclosure is not limited to above examples, and the terminal 100 may determine whether to transmit or receive data to or from the service server 400 or edge data network 300, based on various conditions other than latency.

According to an embodiment, an application client of the terminal 100 may be referred to as a UE app, an application client, a client application (client app), or a UE application. In the disclosure below, for convenience, the application client of the terminal 100 will be referred to as an application client.

According to an embodiment, the 3GPP network 200 is a wireless communication system following the 3GPP standard, and may provide a wireless communication service to the terminal 100 by being connected to the terminal 100. The 3GPP network 200 may include a radio access network (RAN) and a core network. The 3GPP network 200 may include a 3rd generation (3G) network, a long-term evolution (LTE) network, a long-term evolution advanced (LTE-A) network, or a next-generation network (5th generation (5G) or new radio (NR)). Obviously, the disclosure is not limited to the above examples, and the 3GPP network 200 of the disclosure may include a network using another communication technology.

According to an embodiment, the edge data network 300 may denote a server accessed by the terminal 100 to use an MEC service. The edge data network 300 may be arranged inside a base station of the 3GPP network 200 to which the terminal 100 is connected or at a location geographically close to the base station, and provide content that is at least partially the same as content provided by the service server 400. According to an embodiment, MEC may stand for multi-access edge computing or mobile edge computing.

According to an embodiment, the edge data network 300 may be referred to as an MEC server, an MEC host, an edge computing server, a mobile edge host, or an edge computing platform.

According to an embodiment, the edge data network 300 may execute a plurality of edge applications. For example, the edge data network 300 may execute a first edge application 311 and a second edge application 312. According to an embodiment, an edge application may denote an application provided by a third party in the edge data network 300 providing an MEC service. The edge application may be used to form a data session with an application client so as to transmit or receive data related to the application client. In other words, the edge application may form the data session with the application client. According to an embodiment, the data session may denote a communication path formed such that an application client of the terminal 100 and an edge application of the edge data network 300 transmit or receive data.

According to an embodiment, an application of the edge data network 300 may be referred to as an edge application an MEC application (MEC app), an edge application server, an ME (MEC) app, or an edge application. In the disclosure below, for convenience, the application of the edge data network 300 will be referred to as an edge application.

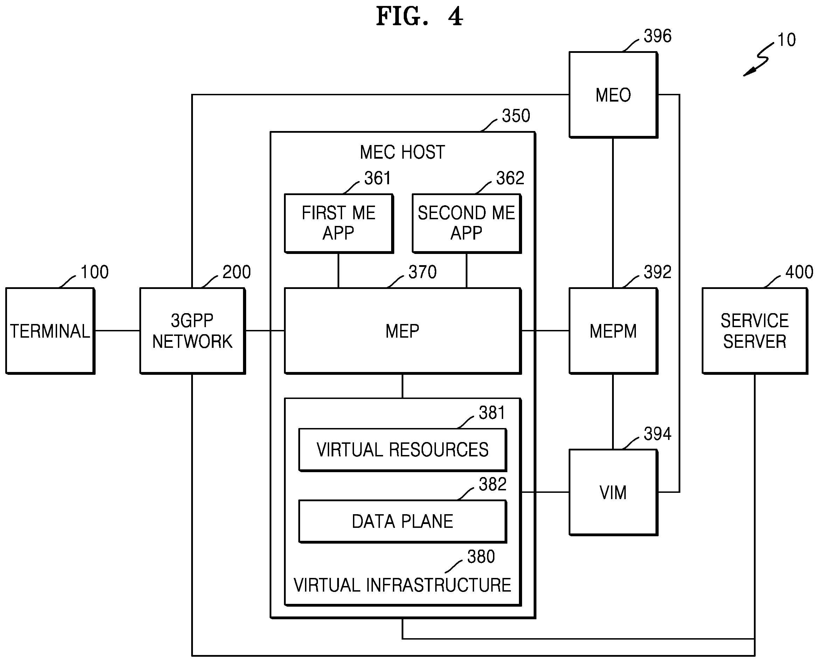

According to an embodiment, the edge data network 300 may include an edge enabler server 320. According to an embodiment, the edge enabler server 320 may be referred to as a mobile edge computing (MEC) platform, a mobile edge (ME) platform (MEP), or a platform. Details about the edge enabler server 320 will be described below with reference to FIG. 4.

According to an embodiment, the service server 400 may provide content related to an application client of the terminal 100. For example, the service server 400 may provide a service or data required for the terminal 100 to drive (or execute) an application client, and provide, to the edge data network 300, an edge application for providing an MEC service to the application client of the terminal 100. Also, the service server 400 may provide, to the edge data network 300, a service or data required to the terminal 100 to drive (or execute) an application client. The service server 400 may be operated or managed by a content business operator providing content to the terminal 100.

Although not shown in FIG. 1, a data network (DN) may be present between the 3GPP network 200 and the edge data network 300. According to an embodiment, the DN may provide a service (for example, an Internet service or an IP multimedia subsystem (IMS) service) by transmitting or receiving data (or a data packet) to or from the terminal 100 through the 3GPP network 200. For example, the DN may be managed by a communication business operator. According to an embodiment, the edge data network 300 may be connected to the 3GPP network 200 through a DN (for example, a local DN).

According to an embodiment of the disclosure, when first application client 111 or second application client 112 is executed in the terminal 100, the terminal 100 may access the edge data network 300 through the 3GPP network 200 to transmit or receive data for executing an application client. Here, when the data is transmitted from the terminal 100 to the edge data network 300 or from the edge data network 300 to the terminal 100, transmission latency may occur. According to an embodiment, such transmission latency may be referred to as end-to-end transmission latency.

According to an embodiment, when the edge data network 300 transmits data to the terminal 100 through the 3GPP network 200, the edge data network 300 may store only a portion of the data to be transmitted to the terminal 100 or may not store the data. For example, with the diversification of MEC services provided to the terminal 100, the edge data network 300 may not store all pieces of data regarding all MEC services provided to the terminal 100. The edge data network 300 may store only a portion of data to be transmitted to the terminal 100 so as to provide an MEC service for some MEC services, and receive remaining data from the service server 400 and transmit the same to the terminal 100.

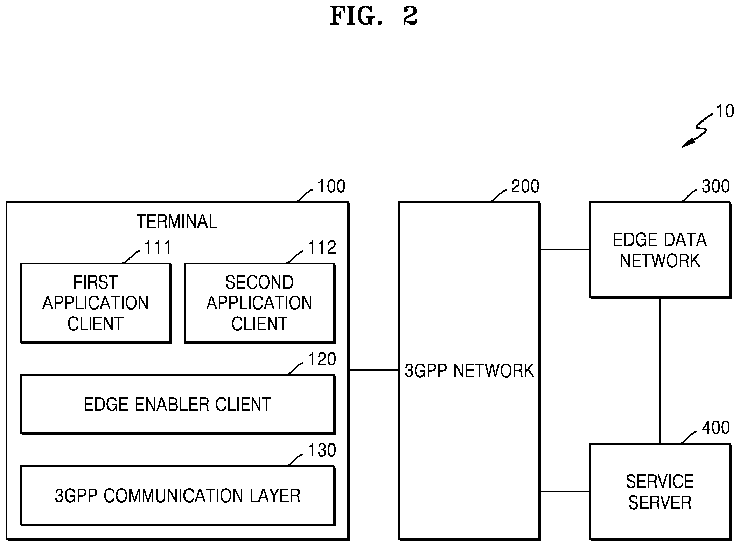

FIG. 2 is a diagram showing a network environment supporting an MEC-based service based on a terminal, according to an embodiment of the disclosure.

According to an embodiment, the terminal 100 may include the first application client 111, the second application client 112, an edge enabler client 120, and a 3GPP communication layer 130. The first application client 111 and the second application client 112 may denote basic applications pre-installed in the terminal 100 or applications provided by a third party. The first application client 111 and the second application client 112 may perform data transmission with the service server 400 based on a required network service type or perform edge computing-based data transmission with the edge data network 300.

According to an embodiment, the edge enabler client 120 may denote a layer performing operations in the terminal 100 to enable the terminal 100 to use an MEC service. According to an embodiment, the edge enabler client 120 may also be referred to as an MEC enabling layer (MEL). The edge enabler client 120 may perform operations of determining which application client is able to use an MEC service and connecting a network interface such that data of an application client of the terminal 100 may be transmitted to the edge data network 300 providing the MEC service.

Also, the edge enabler client 120 may perform, together with the 3GPP communication layer 130, an operation for establishing a data connection for the terminal 100 to use the MEC service. The 3GPP communication layer 130 may denote a layer performing a modem operation for using a mobile communication system, and perform operations of establishing a wireless communication for data communication, register the terminal 100 in the mobile communication system, establish a connection in the mobile communication system for data transmission, and transmit or receive data.

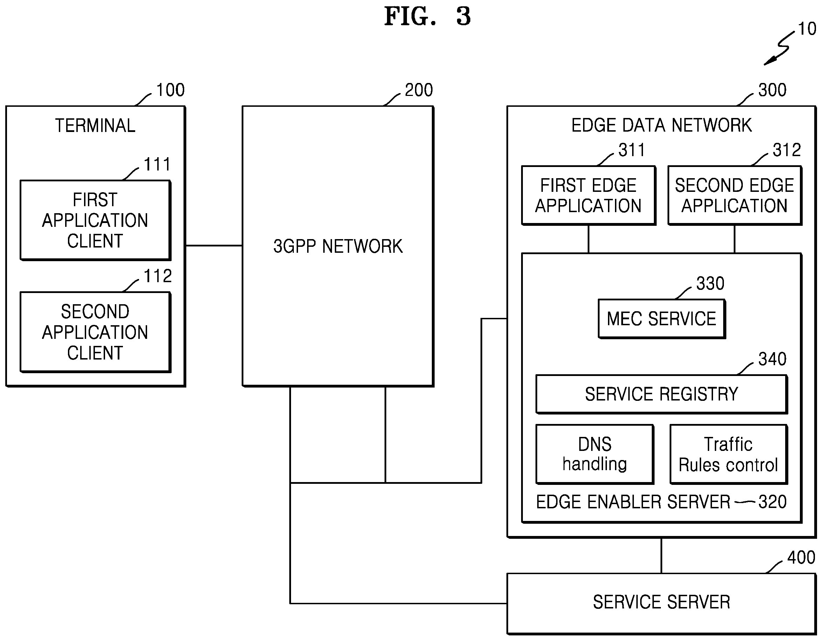

FIG. 3 is a diagram showing a network environment supporting an MEC-based service based on an MEC server, according to an embodiment of the disclosure.

According to an embodiment, the terminal 100 may include the first application client 111 and the second application client 112. The terminal 100 may be connected to the 3GPP network 200 to transmit or receive data related to the first application client 111 and second application client 112.

According to an embodiment, the edge data network 300 may provide an MEC service to the terminal 100. In this regard, the edge data network 300 may be arranged inside the base station of the 3GPP network 200 to which the terminal 100 is connected or at a location geographically close to the base station, and provide content that is at least partially the same as content provided by the service server 400.

According to an embodiment, the edge data network 300 may include a plurality of edge applications (the first edge application 311, the second edge application 312, and the edge enabler server 320). However, the configuration of the edge data network 300 is not limited thereto.

According to an embodiment, an edge application is an application provided by a third party in the edge data network 300, and may form a data session with an application client to transmit or receive data related to the application client.

According to an embodiment, the edge enabler server 320 may provide a function required to execute an edge application. For example, the edge enabler server 320 may provide a function or environment such that an edge application provides an MEC service to the terminal 100 or the like, or the edge application may use (consume) the MEC service. Also, the edge enabler server 320 may perform traffic control or domain name system (DNS) handling.

According to an embodiment, an MEC service may collectively denote a procedure and information-related service required to use an edge application. The MEC service may be provided or used (consumed) by the edge enabler server 320 or an edge application. For example, the edge application may provide the MEC service to the terminal 100 or use the MEC service provided by the edge enabler server 320 to provide the MEC service to the terminal 100. Also, the edge enabler server 320 may provide, to the edge application, the MEC service that may be used by the edge application to provide the MEC service to the terminal 100. Hereinafter, the MEC service may denote a service provided by the edge data network 300 or edge application to the terminal 100 or a service provided by the edge enabler server 320 and used by the edge application.

According to an embodiment, the edge enabler server 320 may provide the MEC service to the edge application. For example, according to the provided MEC service, the edge enabler server 320 may provide, to the edge application, various types of information (data and content, for example, information about a location of a terminal, caching data, and information about a subscribed service). The edge application may provide the MEC service to the terminal 100 by using the MEC service provided by the edge enabler server 320. For example, the edge application may provide the MEC service to the terminal 100, based on pieces of information provided by the edge enabler server 320 as the MEC service. The MEC service provided to the terminal 100 may be a service required for the terminal 100 to drive an application client (for example, provision of data required to drive the application client).

According to an embodiment, the edge enabler server 320 may include an MEC service 330 and a service registry 340. The MEC service 330 may provide a service to edge applications included in the edge data network 300. The MEC service 330 may be implemented as software or a module for performing an individual function. The service registry 340 may provide information about a service available in the edge data network 300. According to an embodiment, the edge enabler server 320 may internally register an edge application when an instance of the edge application is generated (instantiation). The edge enabler server 320 may register (or install) the edge application and store information related to the edge application. The information related to the edge application stored in the edge enabler server 320 may include information about an MEC service to be provided by the edge application to the terminal 100 or the like, information about whether the MEC service is a required service or an option service for the edge application, and the like.

According to an embodiment, the edge application may register a new MEC service in the edge enabler server 320 (service registration) or search for an MEC service registered in the edge enabler server 320. While registering an MEC service in the edge enabler server 320, the edge application may provide, to the edge enabler server 320, information about the MEC service to be registered. The edge enabler server 320 may register the MEC service in the service registry 340.

According to an embodiment, the edge application may update the MEC service registered in the edge enabler server 320. For example, to update the MEC service registered in the edge enabler server 320, the edge application may transmit, to the edge enabler server 320, information about the MEC service to be updated. Here, the edge enabler server 320 may perform updating in the service registry 340 in relation to the updated MEC service.

According to an embodiment, the edge enabler server 320 may transmit, to the edge application in the edge data network 300, information about MEC services registered in the service registry 340. For example, the edge enabler server 320 may transmit, to the edge application, a list of the MEC services registered in the service registry 340. Also, the edge enabler server 320 may transmit, to the edge application, information about availability of MEC services that have been registered or are newly registered in the service registry 340.

According to an embodiment, information indicating that the availability of the MEC services have been changed may be transmitted from the edge enabler server 320 to the edge applications in the edge data network 300. For example, when a new MEC service is registered in the service registry 340 or an MEC service registered in the service registry 340 is updated, and thus availability of an MEC service is changed, the edge enabler server 320 may transmit, to the edge application information indicating that the availability of the MEC service has been changed. Here, the edge enabler server 320 may transmit the information indicating that the availability of the MEC service has been changed to the edge applications that registered, as a required service or optional service, the MEC service of which the availability has been changed.

FIG. 4 is a diagram showing a network environment supporting an MEC-based service, according to another embodiment of the disclosure.

According to an embodiment, components of FIG. 4 may correspond to the components of FIG. 3. For example, an MEC host 350, first and second mobile edge (ME) applications (apps) 361 and 362, and an MEC platform (MEP) 370 of FIG. 4 may respectively correspond to the edge data network 300, the first and second edge applications 311 and 312, and the edge enabler server 320 of FIG. 3. In the descriptions of FIG. 4 below, details overlapping those of FIG. 3 are omitted.

Referring to FIG. 4, an MEC system may include the MEC host 350, a mobile edge platform manager (MEPM) 392, a virtualization infrastructure manager (VIM) 394, and a mobile edge orchestrator (MEO) 396. However, components included in the MEC system is not limited thereto. Each of the components included in the MEC system may denote a physical entity unit or denote a software or module unit capable of performing an individual function. According to an embodiment, the MEC host 350 may include a plurality of ME apps (the first ME app 361 and the second ME app 362), the MEP 370, and a virtual infrastructure 380. However, components of the MEC host 350 are not limited thereto.

According to an embodiment, the virtual infrastructure 380 may include virtual resources 381 and a data plane 382. The virtual infrastructure 380 may provide the virtual resources 381 to an ME app. The virtual resources 381 may include, for example, at least one of a computer resource available to an ME app, a storage resource, or a network resource (for example, a network bandwidth). An ME app of the MEC host 350 may be operated by a virtual machine on the virtual infrastructure 380.

According to an embodiment, the data plane 382 may execute traffic rules received by the MEP 370, and route traffic between an application, a service, a DNS server/proxy, the 3GPP network 200, a local network, and an external network.

According to an embodiment, the MEPM 392 may manage life cycles of ME apps operating in the MEC host 350, and transmit, to the MEO 396, information associated with the life cycles and information related to an execution environment. According to another embodiment, the MEPM 392 may transmit, to the MEP 370, information for operating the ME apps or manage the information. The information for operating the ME apps may include, for example, at least one of rules of an application, a requirement, service approval, or traffic rules.

According to an embodiment, the VIM 394 may allocate, manage, or release the virtual resources 381 of the virtual infrastructure 380, which are required to execute an ME app in the MEC host 350.

According to an embodiment, the MEO 396 may manage and maintain overall functions of data transmission based on the MEC system. The MEO 396 may manage and maintain overall functions of MEC-based data transmission, based on at least one of resources available in the MEC system, an available MEC service, rules and requirements of an application, policy of an operator, or topology. For example, the MEO 396 may select the MEC host 350 suitable to a UE app of the terminal 100, or trigger or terminate instantiation of the UE app.

Here, the UE app of the terminal 100 may require different network services based on at least one of a data rate of the terminal 100, a delay time (or a speed) (latency), reliability, the number of terminals 100 accessing a network, a network accessing cycle of the terminal 100, or average data usage.

The UE app of the terminal 100 may perform data transmission with the service server 400 or perform edge computing-based data transmission with the edge data network 300 or MEC host 350, based on a required network service.

According to an embodiment, whenever the number of network services required by the UE app of the terminal 100 increases, complexity of rules of selecting the suitable MEC host 350 may increase. When network services required by the UE app of the terminal 100 are unable to be represented quantitatively or prioritized due to complexity, the unsuitable MEC host 350 may be selected (or determined).

The disclosure provides a method by which an electronic device 600 determines the suitable edge data network 300 or MEC host 350 so as to provide a high-quality service to a user.

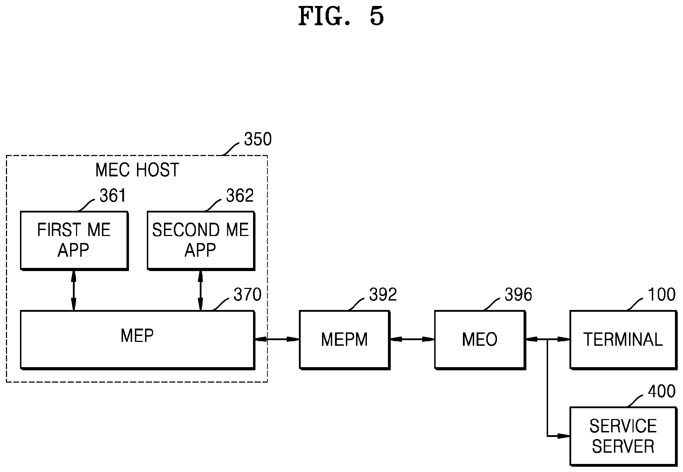

FIG. 5 is a diagram showing a network environment supporting an MEC-based service by determining the suitable MEC host 350, according to an embodiment of the disclosure.

The MEC host 350, the first and second ME apps 361 and 362, and an MEP 370 may respectively correspond to the edge data network 300, the first and second edge applications 311 and 312, and the edge enabler server 320 of FIG. 3. Hereinafter, details about components of FIG. 5, which overlap those in the descriptions of FIGS. 3 and 4, are briefly described.

According to an embodiment, the terminal 100 may denote an apparatus used by a user. The service server 400 may provide content related to an application client of the terminal 100. The MEC host 350 may denote a server accessed by the terminal 100 to use an MEC service. The MEO 396 may manage and maintain overall functions of data transmission based on an MEC system. The MEPM 392 may manage life cycles of ME apps operating in the MEC host 350, and transmit, to the MEO 396, information associated with the life cycles and information related to an execution environment. The first and second ME apps 361 and 362 may denote applications provided by a third party in the MEC host 350 providing the MEC service. The MEP 370 may provide a function required to execute the first and second ME apps 361 and 362.

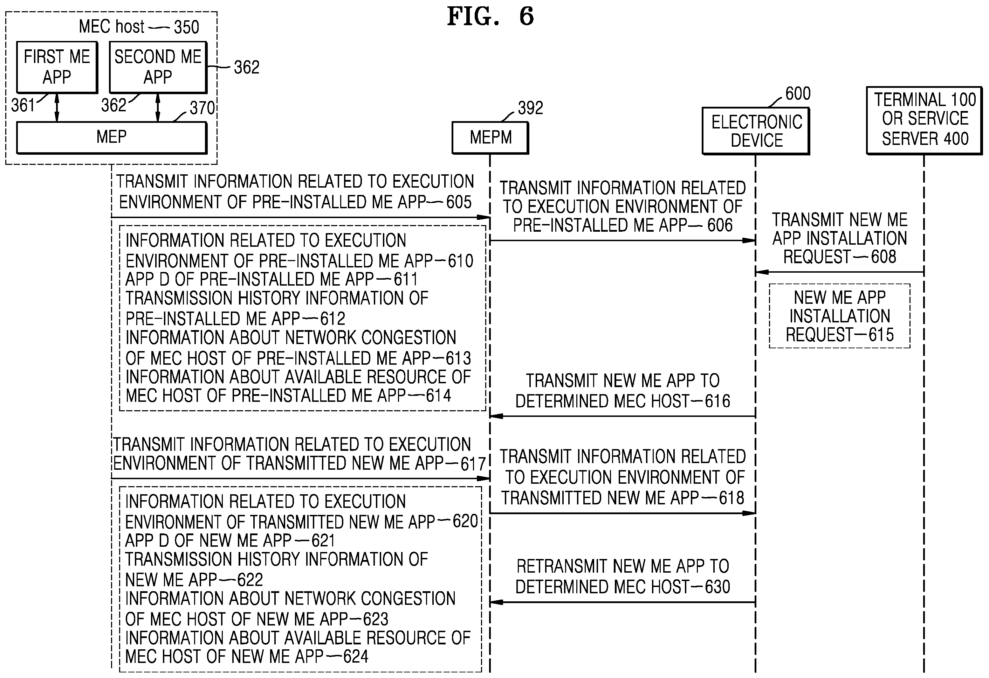

FIG. 6 is a diagram showing procedures for supporting an MEC-based service by determining the suitable MEC host 350, according to an embodiment of the disclosure.

The electronic device 600 may manage and maintain overall functions of data transmission based on an MEC system. For example, the electronic device 600 may be the MEO 396 in a network environment supporting the MEC-based service of FIG. 5.

In operation 605, the MEC host 350 may transmit, to the MEPM 392, information 610 related to an execution environment of a pre-installed ME app. In operation 606, the MEPM 392 may transmit, to the electronic device 600, the information 610 related to the execution environment of the pre-installed ME app.

According to an embodiment of the disclosure, the information 610 related to the execution environment of the pre-installed or pre-registered ME app may include at least one of requirement information (application descriptor (app D)) 611 related to the execution environment of the pre-installed ME app, transmission history information 612 of the pre-installed ME app, information 613 about network congestion of the MEC host 350 of the pre-installed ME app, or information 614 about an available resource of the MEC host 350 of the pre-installed ME app.

According to an embodiment of the disclosure, the app D 611 of the ME app may be information related to an environment required for execution of the ME app. For example, the information related to the environment may include at least one of latency information required to execute the ME app, required resource information, computing power, bandwidth, storage, or information on a service being used.

According to another embodiment of the disclosure, the app D 611 of the ME app may be requirement information about a network service. For example, the requirement information may include at least one of a data rate of the terminal 100, latency (or a speed), reliability, the number of terminals 100 accessing a network, a network access cycle of the terminal 100, or average data usage.

As such, the app D 611 of the ME app includes information (for example, location information) related to a service used for execution of the ME app, and in detail, pieces of information related to the environment required to execute the ME app, and thus similarity of the ME apps may be determined by the electronic device 600 based on the app D 611 of the ME app. For example, regarding vehicle navigation applications, the electronic device 600 may determine ME apps to be similar when pieces of information related to services used to execute the ME apps are the same, i.e., location information, and a difference in latency required for execution, a required resource, computing power, a bandwidth, or storage is equal to or less than a set value.

According to an embodiment of the disclosure, the transmission history information 612 of the pre-installed ME app may denote a history of transmitting an ME app from the MEO 396 or electronic device 600 to the MEPM 392 or MEC host 350 so as to install (or reinstall) the ME app. According to another embodiment, the transmission history information 612 of the pre-installed ME app may include change history information of the MEC host 350 of the pre-installed ME app.

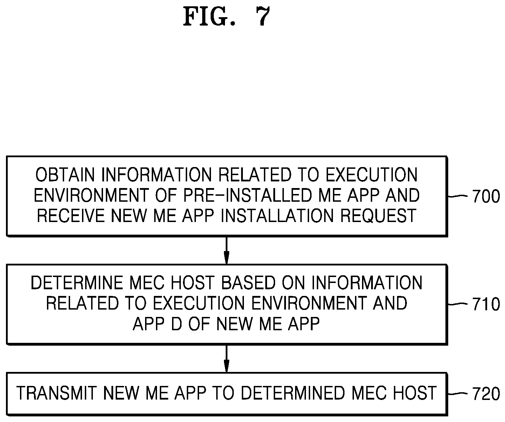

According to an embodiment of the disclosure, even after the ME app is installed in the MEC host 350, the electronic device 600 or MEO 396 may retransmit the ME app to reinstall or relocate the ME app in another MEC host 350 or MEPM 392 after determining that the MEC host 350 where the ME app is installed is not a suitable execution environment for the ME app. Accordingly, when the frequency of reinstalling the ME app is high, the frequency of retransmitting or reinstalling the ME app is high because the MEC host 350 or MEPM 392 where the ME app is installed is not a suitable execution environment. Accordingly, in the execution environment of the ME app, the electronic device 600 may determine that the MEC host 350 or MEPM 392 where the ME app is installed is unstable. On the other hand, when the frequency of retransmitting or reinstalling the ME app is low, the electronic device 600 may determine that the MEC host 350 or MEPM 392 is stable with respect to the execution environment of the ME app. An operation in which the electronic device 600 determines the suitable MEC host 350 will be described in detail with respect to FIGS. 7 through 13.

According to an embodiment of the disclosure, the information 613 about the network congestion of the MEC host 350 of the pre-installed ME app may include the number of terminals 100 accessing the MEC host 350, the network access cycle of the terminal 100, the average data usage, in/out network traffic, or the number of ME apps installed in the MEC host 350, but is not limited thereto.

According to an embodiment of the disclosure, the information 614 about the available resource of the MEC host 350 of the pre-installed ME app may include a central processing unit (CPU), memory, computing power, or storage of the MEC host 350, but is not limited thereto.

As such, the information 613 about the network congestion of the MEC host 350 of the pre-installed ME app or the information 614 about the available resource of the MEC host 350 of the pre-installed ME app includes information about the MEC host 350 where the ME app may be installed, and thus an idle resource of the MEC host 350 may be determined based on the information 613 about the network congestion of the MEC host 350 of the pre-installed ME app (In/out network traffic) or the information 614 about the available resource of the MEC host 350 of the pre-installed ME app.

According to an embodiment of the disclosure, the information 610 related to the execution environment of the pre-installed ME app may be transmitted from the MEC host 350 or MEPM 392 to the electronic device 600. According to another embodiment of the disclosure, the electronic device 600 may store the information 610 related to the execution environment of the pre-installed ME app.

In operation 608, the terminal 100, an external server (not shown), or the service server 400 may transmit a new ME app installation request 615 to the electronic device 600. The new ME app installation request 615 may include an app D 621 of a new ME app.

According to an embodiment of the disclosure, the electronic device 600 may determine the MEC host 350 for installing the new ME app, based on the information 610 related to the execution environment of the pre-installed ME app and the app D 621 of the new ME app. A detailed operation of the determining will be described with reference to FIG. 7.

In operation 616, the electronic device 600 may transmit the new ME app to the MEPM 392 or MEC host 350 so as to install the new ME app in the determined MEC host 350.

In operation 617, the MEC host 350 may transmit, to the MEPM 392, information 620 related to an execution environment of the transmitted new ME app.

In operation 618, the MEPM 392 may transmit, to the electronic device 600, the information 620 related to the execution environment of the transmitted new ME app. According to another embodiment of the disclosure, the electronic device 600 may store the information 620 related to the execution environment of the transmitted new ME app.

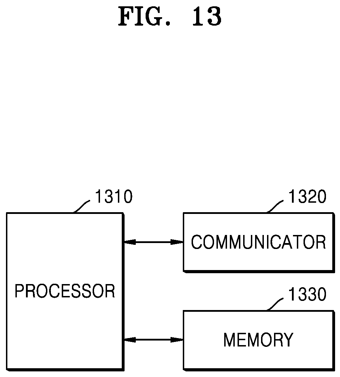

According to an embodiment of the disclosure, the electronic device 600 may determine the MEC host 350 for reinstalling the transmitted new ME app, based on the information 610 related to the execution environment of the pre-installed ME app and the information 620 related to the execution environment of the transmitted new ME app. A detailed operation of the determining will be described with reference to FIG. 13.

In operation 630, the electronic device 600 may retransmit the new ME app to the MEPM 392 so as to reinstall the new ME app in the determined MEC host 350. According to another embodiment of the disclosure, the electronic device 600 may retransmit the new ME app to the determined MEC host 350.

FIG. 7 is a flowchart for describing operations in which the electronic device 600 determines the suitable MEC host 350, according to an embodiment of the disclosure.

In operation 700, the electronic device 600 may obtain the information 610 related to the execution environment of the pre-installed ME app and receive the new ME app installation request 615. An operation of obtaining the information 610 related to the execution environment of the pre-installed ME app and an operation of receiving the new ME app installation request 615 may be simultaneously performed or an order of performing the operations may be changed.

According to an embodiment of the disclosure, the operation in which the electronic device 600 obtains the information 610 related to the execution environment of the pre-installed ME app may include receiving the same from the MEC host 350 or MEPM 392. According to another embodiment of the disclosure, because the electronic device 600 stores the information 610 related to the execution environment of the pre-installed ME app, the information 610 related to the execution environment of the pre-installed ME app may not be received from the MEC host 350 or MEPM 392.

Then, in operation 710, the electronic device 600 may determine the MEC host 350 based on the information 610 related to the execution environment of the pre-installed ME app and the app D 621 of the new ME app.

The app D 621 of the new ME app may include information related to an environment required to execute the new ME app. However, it is not possible for an ME app developer to predict all actual execution environments, there is a limit to including all pieces of information 620 related to an environment required for execution to the app D 621. Accordingly, the MEO 396 may install the new ME app in the MEC host 350 based on the app D 621 of the new ME app, and after the new ME app is installed, reinstall the new ME app in another MEC host 350 through the information related to the execution environment.

When the MEO 396 reinstalls the new ME app, the MEO 396 may revise the app D 621 of the new ME app such that the new ME app may be reinstalled in the suitable MEC host 350. Also, the MEO 396 may add an installation rule for the MEC host 350, based on the app D 621 of the ME app. When the MEO 396 revises the app D 621 of the new ME app or adds a rule, not only time costs and financial costs are consumed, but also complexity of rules may increase. Accordingly, it is required to reduce reinstallation of a new ME app and determine the optimum MEC host 350.

According to an embodiment of the disclosure, the information 610 related to the execution environment of the pre-installed ME app may include at least one of the app D 611 of the pre-installed ME app, the transmission history information 612 of the pre-installed ME app, the information 613 about the network congestion of the MEC host 350 of the pre-installed ME app, or the information 614 about the available resource of the MEC host 350 of the pre-installed ME app. The transmission history information 612 of the pre-installed ME app includes the change history information of the MEC host 350 of the ME app, and thus the information 610 related to the execution environment of the pre-installed ME app may denote information related to an actual execution environment (or an execution environment after installation) of the ME app.

In operation 710, the electronic device 600 determines the MEC host 350 for installing the new ME app, based on the information 610 related to the execution environment of the pre-installed ME app and the app D 621 of the new ME app, and thus reinstallation of the new ME app may be reduced and the optimum MEC host 350 may be determined.

In operation 720, the electronic device 600 may transmit the new ME app to the determined MEC host 350 to install the new ME app in the determined MEC host 350. According to another embodiment of the disclosure, when the electronic device 600 transmits the new ME app to the MEPM 392, the MEPM 392 may transmit the new ME app to the determined MEC host 350.

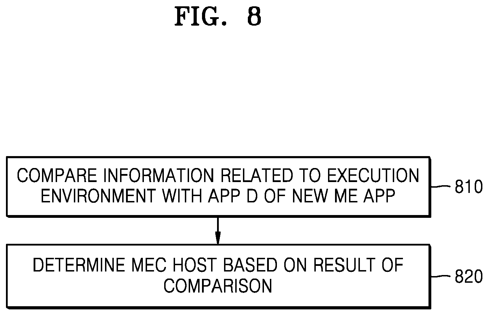

FIG. 8 is a flowchart for describing operations in which the electronic device 600 determines the suitable MEC host 350, according to an embodiment of the disclosure. Operations 810 and 820 of FIG. 8 are concretization of operation 710 of FIG. 7 of determining the MEC host 350 based on the information 610 related to the execution environment of the pre-installed ME app and the app D 621 of the new ME app.

In operation 810, the electronic device 600 may compare the information 610 related to the execution environment of the pre-installed ME app with the app D 621 of the new ME app. The electronic device 600 may compare information among the information 610 related to the execution environment of the pre-installed ME app, which corresponds to the app D 621 of the new ME app, with the app D 621 of the new ME app. For example, the electronic device 600 may compare the pre-installed ME app with the new ME app with respect to each of latency required to execute an ME app, required resource information, computing power, a bandwidth, a storage, and a service used for execution.

As described above, because an app D of an ME app includes information on a service being used, and in detail, pieces of information related to an environment required to execute the ME app, similarity of ME apps may be determined by comparing app Ds of the ME apps.

According to an embodiment of the disclosure, the electronic device 600 may determine a pre-installed ME app, in which information corresponding to the app D 621 of the new ME app from among the information 610 related to the execution environment of the pre-installed ME app differs from the app D 621 of the new ME app by a set value or less, to be similar to the new ME app. According to another embodiment of the disclosure, the electronic device 600 may determine a pre-installed ME app, in which a sum of differences of pieces of corresponding information is equal to or less than the set value, to be similar to the new ME app. Here, the electronic device 600 may determine a pre-installed ME app, in which a weighted sum of the differences of the pieces of corresponding information is equal to or less than the set value, to be similar to the new ME app. For example, a pre-installed ME app, in which a weighted sum obtained by multiplying a coefficient A by a difference in latencies required to execute ME apps and multiplying a coefficient B by a difference in required resources for execution of ME apps is equal to or less than the set value, to be similar to the new ME app.

Also, coefficients of a weighted sum may be provided and learned by each node of a hidden layer of an artificial neural network. The learning of the coefficients of the weighted sum may be performed via supervised learning (for example, k-nearest neighbor (KNN)), unsupervised learning (for example, K-means), or reinforced learning (for example, Q-learning). Details about each learning method are well-known, and thus descriptions thereof are omitted here.

In operation 820, the electronic device 600 may determine the MEC host 350 based on a result of the comparison. The electronic device 600 may determine the MEC host 350 where the pre-installed ME app similar to the new ME app is installed as the MEC host 350 for installing the new ME app. Even when the number of pieces of information included in an app D of an ME app increases, complexity of rules may not increase because the electronic device 600 determines the MEC host 350 through similarity of ME apps. Also, the electronic device 600 may compare app Ds of ME apps and obtain a weighted sum of differences of pieces of corresponding information. Accordingly, even when requirement information related to an execution environment is unable to be quantitatively represented or priority thereof is unable to be determined due to complexity, the electronic device 600 may determine the suitable MEC host 350 by adjusting coefficients.

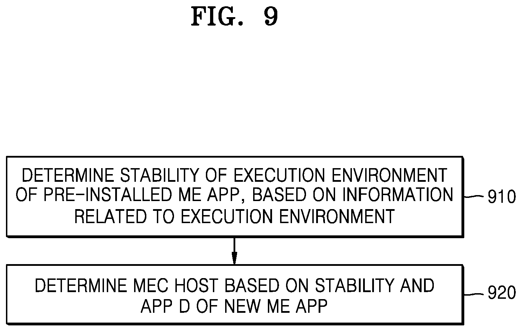

FIG. 9 is a flowchart for describing principles of operations in which the electronic device 600 determines the suitable MEC host 350, according to an embodiment of the disclosure. Operations 910 and 920 of FIG. 9 are concretization of operation 710 of FIG. 7 of determining the MEC host 350 based on the information 610 related to the execution environment of the pre-installed ME app and the app D 621 of the new ME app.

In operation 910, the electronic device 600 may determine stability of the execution environment of the pre-installed ME app, based on the information 610 related to the execution environment of the pre-installed ME app. As described above with reference to FIG. 6, regarding an ME app with low frequency of retransmission or reinstallation, it may be determined that the MEC host 350 or MEPM 392 in which the ME app is installed is stable with respect to an execution environment of the ME app. The electronic device 600 may determine the stability of the execution environment of the pre-installed ME app, based on information related to the execution environment, for example, the transmission history information 612 of the pre-installed ME app.

In operation 920, the electronic device 600 may determine the MEC host 350 based on the stability of the execution environment of the pre-installed ME app and the app D 621 of the new ME app. The electronic device 600 may determine the MEC host 350 of the pre-installed ME app with high stability (low retransmission frequency) as the MEC host 350 for installing the new ME app. Accordingly, the new ME app being reinstalled or relocated in another MEC host 350 or MEPM 392 because the installed MEC host 350 is not a suitable execution environment for the new ME app may be reduced.

According to another embodiment of the disclosure, the electronic device 600 may determine the MEC host 350 with high stability of execution environment from among the MEC hosts 350 of pre-installed ME apps similar to the new ME app, as the MEC host 350 for installing the new ME app. Also, the electronic device 600 may determine the MEC host 350 based on a sum or weighted sum of the similarity and stability of the ME app. As described above, coefficients of the weighted sum may be provided and learned by each node of a hidden layer of an artificial neural network.

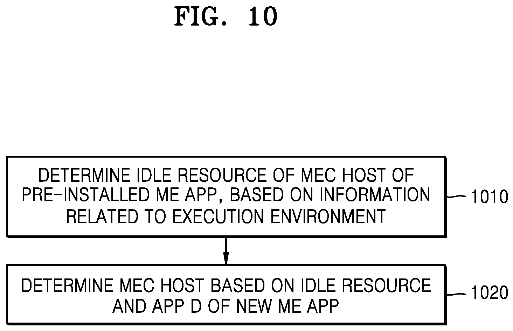

FIG. 10 is a flowchart for describing principles of operations in which the electronic device 600 determines the suitable MEC host 350, according to an embodiment of the disclosure. Operations 1010 and 1020 of FIG. 10 are concretization of operation 710 of FIG. 7 of determining the MEC host 350 based on the information 610 related to the execution environment of the pre-installed ME app and the app D 621 of the new ME app.

In operation 1010, the electronic device 600 may determine an idle resource of the MEC host 350 of the pre-installed ME app, based on information related to a pre-installed execution environment. The electronic device 600 may determine a resource available in the MEC host 350 of the pre-installed ME app, based on the information related to the pre-installed execution environment, for example, information about network congestion or information about an available resource.

In operation 1020, the electronic device 600 may determine the MEC host 350 based on the idle resource and the app D 621 of the new ME app. The electronic device 600 may determine a resource required for execution, based on the app D 621 of the new ME app, and filter the MEC host 350 that possesses an idle resource smaller than the required resource. Accordingly, the new ME app being reinstalled or relocated in another MEC host 350 or MEPM 392 because the installed MEC host 350 is not a suitable execution environment for the new ME app, for example, the resource required for the execution is insufficient, may be reduced.

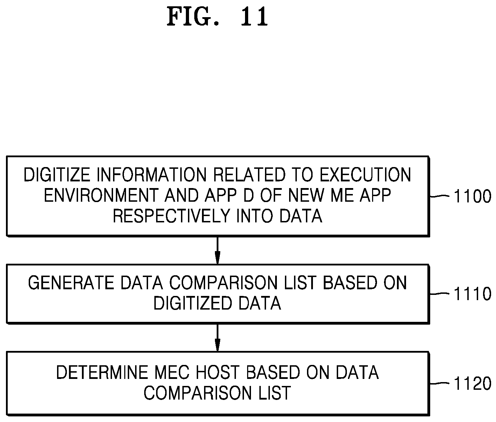

FIG. 11 is a flowchart for describing operations in which the electronic device 600 determines the suitable MEC host 350, according to an embodiment of the disclosure. Operations 1100, 1110, and 1120 of FIG. 11 are concretization of operation 710 of FIG. 7 of determining the MEC host 350 based on the information 610 related to the execution environment of the pre-installed ME app and the app D 621 of the new ME app.

In operation 1100, the electronic device 600 may digitize the information 610 related to the pre-installed execution environment and the app D 621 of the new ME app respectively into data. The electronic device 600 may generate a matrix or array such that pieces of information may be distinguished from each other, and allocate a digitized data value to each component.

In operation 1110, the electronic device 600 may generate a data comparison list based on the digitized data. The data comparison list may be generated by a sum or weighted sum of differences in digitized data of corresponding information between the pre-installed ME app and the new ME app, so as to determine similarity of ME apps. As described above, coefficients of the weighted sum may be provided and learned by each node of a hidden layer of an artificial neural network.

In operation 1120, the electronic device 600 may determine the MEC host 350 based on the data comparison list. The electronic device 600 may list or sort the data comparison list in an order from high similarity as the sum or weighted sum of the differences in the digitized data of the corresponding information included in the data comparison list is small, and from high stability because retransmission or reinstallation frequency is low. The listing may be performed according to a sorting algorithm, and descriptions about the sorting algorithm will be omitted here because the sorting algorithm is a well-known technology.

According to another embodiment of the disclosure, the electronic device 600 may list the data comparison list in an order from a high sum or weighted sum of similarity and stability that are digitized into data. In this case, as described above, coefficients of the weighted sum may be provided and learned by each node of a hidden layer of an artificial neural network.

According to an embodiment of the disclosure, the electronic device 600 may filter the MEC host 350 that possesses an idle resource smaller than a resource required to execute the new ME app that is digitized into data. According to another embodiment of the disclosure, the electronic device 600 may not include, to the data comparison list, the MEC host 350 that possesses the idle resource smaller than the resource required to execute the new ME app. Accordingly, the filtering or the comparing of the idle resource may be performed before operation 1110.

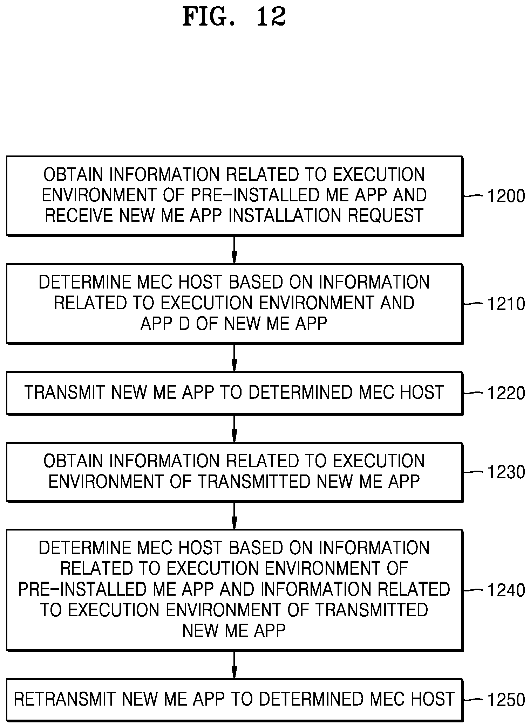

FIG. 12 is a flowchart for describing operations in which the electronic device 600 retransmits the new ME app, according to an embodiment of the disclosure. Operations 1200, 1210, and 1220 of FIG. 12 are the same as operations 700, 710, and 720 of FIG. 7. Hereinafter, details about components of FIG. 12, which overlap those in the descriptions of FIG. 7, are briefly described.

In operation 1200, the electronic device 600 may obtain the information 610 related to the execution environment of the pre-installed ME app and receive the new ME app installation request 615. In operation 1210, the electronic device 600 may determine the MEC host 350 for installing the new ME app, based on the information 610 related to the execution environment of the pre-installed ME app and the app D 621 of the new ME app. In operation 1220, the electronic device 600 may transmit the new ME app to the determined MEC host 350 to install the new ME app in the determined MEC host 350.

In operation 1230, the electronic device 600 may obtain the information 620 related to the execution environment of the transmitted new ME app 621. As described above, the information 620 related to the execution environment of the transmitted new ME app may include at least one of requirement information (the app D 621) related to the execution environment of the new ME app, transmission history information 622 of the new ME app, information 623 about network congestion of the MEC host 350 of the new ME app, or information 624 about an available resource of the MEC host 350 of the new ME app.

According to another embodiment of the disclosure, because the electronic device 600 stores the information 620 related to the execution environment of the transmitted new ME app, the information 620 related to the execution environment of the transmitted new ME app may not be received from the MEC host 350 or MEPM 392.

In operation 1240, the electronic device 600 may determine the MEC host 350 based on the information 610 related to the execution environment of the pre-installed ME app and the information 620 related to the execution environment of the transmitted new ME app. In operation 1240, the app D 621 of the new ME app of operation 710 is changed to the information 620 related to the execution environment of the transmitted new ME app, and other principles of operation 1240 are the same as operation 710. For example, as described above (refer to the descriptions in FIGS. 7 through 11), the electronic device 600 may determine the MEC host 350 where the transmitted new ME app is to be reinstalled, based on the similarity between the transmitted new ME app and the pre-installed ME app, the stability of the pre-installed ME app with respect to the MEC host 350, or the idle resource of the MEC host 350.

As such, even when the app D 621 of the transmitted new ME app is not revised, the electronic device 600 may determine the suitable MEC host 350 where the transmitted new ME app is to be reinstalled, based on the stability of the pre-installed ME app with respect to the MEC host 350 or the idle resource of the MEC host 350. Also, even when an installation rule for the MEC host 350 based on an app D of an ME app is not added, the electronic device 600 may determine the suitable MEC host 350 based on information related to an execution environment after installation of the ME app (or an actual execution environment), for example, the stability of the pre-installed ME app with respect to the MEC host 350.

In operation 1250, the electronic device 600 may retransmit the new ME app to the determined MEC host 350. According to another embodiment of the disclosure, the electronic device 600 may retransmit the new ME app to the MEPM 392 or MEC host 350 so as to install the new ME app in the determined MEC host 350.

FIG. 13 is a block diagram of the electronic device 600 according to an embodiment of the disclosure.

As shown in FIG. 13, the electronic device 600 according to the disclosure may include a processor 1310, a communicator 1320, and a memory 1330. However, the components of the electronic device 600 are not limited thereto. For example, the electronic device 600 may be implemented by more or fewer components than those described above. In addition, the processor 1310, the communicator 1320, and the memory 1330 may be implemented as a single chip.

According to an embodiment, the processor 1310 may control a series of processes for the electronic device 600 to operate according to an embodiment of the disclosure described above. For example, the components of the electronic device 600 may be controlled such that the electronic device 600 according to an embodiment of the disclosure may determine the suitable MEC host 350. There may be a plurality of processors 1310, and the processor 1310 may execute a plurality of instructions (or programs) stored in the memory 1330 to perform the above-described operations, for example, an operation of determining the suitable MEC host 350. Detailed operations have been described above with reference to FIGS. 7 through 12.

The communicator 1320 may transmit or receive a signal to or from an external device (for example, the terminal 100), a network (for example, the 3GPP network 200), or a server (for example, the service server 400). The signal transmitted or received by the communicator 1320 may include control information and data. The communicator 1320 may include a radio frequency (RF) transmitter for up-converting and amplifying a frequency of a transmitted signal, and a RF receiver for amplifying low-noise and downconverting a frequency of a received signal. However, this is only an example of the communicator 1320 and components of the communicator 1320 are not limited to the RF transmitter and the RF receiver. Also, the communicator 1320 may receive and output, to the processor 1310, a signal through a wireless channel, and transmit a signal output from the processor 1310 through the wireless channel.

According to an embodiment, the communicator 1320 may transmit or receive data to or from the terminal 100, an external server (not shown), and the service server 400. For example, the communicator 1320 may receive the new ME app installation request 615 from the terminal 100, external server, or service server 400, through the 3GPP network 200.

According to an embodiment, the communicator 1320 may transmit or receive data to or from the MEC host 350 or MEPM 392 according to control by the processor 1310. For example, the communicator 1320 may receive the information 610 related to the execution environment of the pre-installed ME app from the MEC host 350 or MEPM 392, and transmit the new ME app to the determined MEC host 350. According to another embodiment of the disclosure, because the electronic device 600 stores the information 610 related to the execution environment of the pre-installed ME app, the information 610 related to the execution environment of the pre-installed ME app may not be received from the MEC host 350 or MEPM 392.

According to an embodiment, the memory 1330 may store data and a plurality of instructions (or programs) required for operations of the electronic device 600. Also, the memory 1330 may store control information or data included in a signal transmitted or received by the electronic device 600. The memory 1330 may include a storage medium, such as read-only memory (ROM), random access memory (RAM), a hard disk, a CD-ROM, or a DVD, or a combination of storage media. Also, there may be a plurality of the memories 1330. According to an embodiment, the memory 1330 may store a plurality of instructions (or programs) for the electronic device 600 according to an embodiment of the disclosure to determine the suitable MEC host 350.

Methods according to the claims of the disclosure or the embodiments described in the specification may be implemented in hardware, software, or a combination of hardware and software.

When the methods are implemented in software, a computer-readable recording medium or computer program product having one or more programs (software modules) recorded thereon may be provided. The one or more programs recorded on the computer-readable recording medium or computer program product are configured to be executable by one or more processors in the electronic device 600 (device). The one or more programs include instructions that enable the electronic device 600 to execute the methods according to the embodiments of the disclosure described in the claims or the detailed description.

The programs (e.g., software modules or software) may be stored in random access memory (RAM), non-volatile memory including flash memory, read-only memory (ROM), electrically erasable programmable read-only memory (EEPROM), a magnetic disc storage device, a compact disc-ROM (CD-ROM), a digital versatile disc (DVD), another optical storage device, or a magnetic cassette. Alternatively, the programs may be stored in memory including a combination of some or all of the above-mentioned storage media. A plurality of such memories may be included.

In addition, the programs may be stored in an attachable storage device accessible through any or a combination of communication networks such as the Internet, an intranet, a local area network (LAN), a wide LAN (WLAN), and a storage area network (SAN). The storage device may be connected through an external port to an apparatus according to the embodiments of the disclosure. Another storage device on the communication network may also be connected to the apparatus performing the embodiments of the disclosure.

In the disclosure, the term "computer program product" or "computer-readable medium" is used to entirely refer to a medium such as a memory, a hard disk installed in a hard disk drive, or a signal. The "computer program product" or "computer-readable medium" provides software configured of instructions for setting a length of a timer for receiving a missing data packet, based on network metrics corresponding to a determined event according to the disclosure, to a computer system.

In the afore-described embodiments of the disclosure, elements included in the disclosure are expressed in a singular or plural form according to specific embodiments. However, the singular or plural form is appropriately selected for convenience of explanation and the disclosure is not limited thereto. As such, an element expressed in a plural form may also be configured as a single element, and an element expressed in a singular form may also be configured as plural elements.

Meanwhile, specific embodiments have been described in the detailed description of the disclosure, but various modifications may be possible as long as they do not depart from the scope of the invention as it is depicted by the appended claims.

## Claims

1. An electronic device (600) for determining a mobile edge computing, MEC, host, comprising:
a memory (1330) storing a plurality of instructions; and
at least one processor (1310),
wherein the at least one processor (1310) is configured to execute the plurality of instructions to:
obtain (700) information (610) related to an execution environment of a pre-installed mobile edge application in a mobile edge computing host, wherein the obtained information related to an execution environment comprises requirement information for execution of the pre-installed mobile edge application;
receive an installation request for a new mobile edge application, the request comprising requirement information related to an execution environment of the new mobile edge application;
compare the requirement information for execution of the pre-installed mobile edge application with the requirement information for execution of the new mobile edge application;
based on the comparison, determine similarity between the pre-installed mobile edge application and the new mobile edge application;
in case that the similarity is greater than a first pre-determined value, determine (710) the mobile edge computing host where the pre-installed mobile edge application is installed for installing the new mobile edge application; and
transmit (720) the new mobile edge application to the determined mobile edge computing host.

2. The electronic device (600) of claim 1, wherein the information related to the execution environment further comprises transmission history of the pre-installed mobile edge application in the mobile edge computing host, and the at least one processor (1310) is further configured to execute the plurality of instructions to:
determine stability of the execution environment of the pre-installed one mobile edge application, based on information of a reinstallation frequency of the pre-installed mobile edge application within the mobile edge computing host, comprised within the transmission history information; and
in case that the stability is greater than a second pre-determined value determine the mobile edge computing host where the pre-installed mobile edge application is installed for installing the new mobile edge application.

3. The electronic device (600) of claim 1, wherein the information related to the execution environment further comprises network congestion, and available resource, information of the mobile edge computing host of the preinstalled mobile edge application, and wherein the at least one processor (1310) is further configured to execute the plurality of instructions to:
determine an idle resource of the mobile edge computing host of the pre-installed mobile edge application, based on the network congestion and available resource information ; and
determine the mobile edge computing host based on the idle resource and the requirement information related to the execution environment of the new mobile edge application.

4. The electronic device (600) of claim 1, wherein the at least one processor (1310) is further configured to execute the plurality of instructions to:
digitize the information related to the execution environment and the requirement information related to the execution environment of the new mobile edge application respectively into data; and
determine the mobile edge computing host based on the digitized data.

5. The electronic device (600) of claim 4, wherein the at least one processor (1310) is further configured to execute the plurality of instructions to:
generate a data comparison list based on the digitized data; and
determine the mobile edge computing host based on the data comparison list.

6. The electronic device (600) of claim 1, wherein the at least one processor (1310) is further configured to execute the plurality of instructions to:
obtain information related to the requirement information related to the execution environment of the transmitted new mobile edge application;
determine a mobile edge computing host for reinstalling the new mobile edge application, based on the information related to the execution environment of the pre-installed mobile edge application and the information related to the execution environment of the transmitted new mobile edge application; and
retransmit the new mobile edge application to the determined mobile edge computing host.

7. A method, performed by an electronic device (600), of transmitting a mobile edge application to a determined mobile edge computing host, the method comprising:
obtaining (700) information related to an execution environment of a pre-installed mobile edge application in a mobile edge computing host, wherein the obtained information related to an execution environment comprises requirement information for execution of the pre-installed mobile edge application;
receiving an installation request for a new mobile edge application the request comprising requirement information related to an execution environment of the new mobile edge application;
comparing the requirement information for execution of the pre-installed mobile edge application with the requirement information for execution of the new mobile edge application;
based on the comparison, determining similarity between the pre-installed mobile edge application and the new mobile edge application;
in case that the similarity is greater than a first pre-determined value, determining (710) the mobile edge computing host where the pre-installed mobile edge application is installed for installing the new mobile edge application; and
transmitting (720) the new mobile edge application to the determined mobile edge computing host.

8. The method of claim 7, wherein the information related to the execution environment further comprises transmission history of the pre-installed mobile edge application in the mobile edge computing host, and the determining of the mobile edge computing host comprises:
determining stability of the execution environment of the pre-installed mobile edge application, based on information of a reinstallation frequency of the pre-installed mobile edge application within the mobile edge computing host, comprised within transmission history information; and
in case that the stability is greater than a second pre-determined value, determining the mobile edge computing host where the pre-installed mobile edge application is installed for installing the new mobile edge application.

9. The method of claim 7, wherein the information related to the execution environment further comprises network congestion, and available resource, information of the mobile edge computing host of the preinstalled mobile edge application, and wherein the determining of the mobile edge computing host:
determining an idle resource of the mobile edge computing host of the at least one pre-installed mobile edge application, based on the network congestion and available resource information; and
determining the mobile edge computing host based on the idle resource and the requirement information related to the execution environment of the new mobile edge application.

10. The method of claim 7, wherein the determining of the mobile edge computing host for installing the new mobile edge application comprises:
digitizing the information related to the execution environment and the requirement information related to the execution environment of the new mobile edge application respectively into data; and
determining the mobile edge computing host based on the digitized data.

11. The method of claim 10, wherein the determining of the mobile edge computing host based on the digitized data comprises:
generating a data comparison list based on the digitized data; and
determining the mobile edge computing host based on the data comparison list.

12. The method of claim 7, further comprising:
obtaining information related to the execution environment of the transmitted new mobile edge application;
determining a mobile edge computing host for reinstalling the new mobile edge application, based on the information related to the execution environment of the pre-installed at least one mobile edge application and the information related to the execution environment of the transmitted new mobile edge application; and
retransmitting the new mobile edge application to the determined mobile edge computing host.

13. A computer-readable recording medium having recorded thereon a program for executing a method, performed by an electronic device (600), of transmitting a mobile edge application to a determined mobile edge computing host, the method comprising:
obtaining information related to an execution environment of pre-installed mobile edge application in a mobile edge computing host,
wherein the obtained information related to an execution environment comprises requirement information for execution of the pre-installed mobile edge application;
receiving an installation request for a new mobile edge application, the request comprising requirement information related to an execution environment of the new mobile edge application;
comparing the requirement information for execution of the pre-installed mobile edge application with the requirement information for execution of the new mobile edge application;
based on the comparison, determining similarity between the pre-installed mobile edge application and the new mobile edge application;
in case that the similarity is greater than a first pre-determined value,
determining the mobile edge computing host where the pre-installed application is installed for installing the new mobile edge application,; and
transmitting the new mobile edge application to the determined mobile edge computing host.

## Patentansprüche

1. Elektronische Vorrichtung (600) zum Bestimmen eines Mobile-Edge-Computing-Hosts, MEC-Hosts, umfassend:
einen Speicher (1330), der eine Vielzahl von Anweisungen speichert; und
mindestens einen Prozessor (1310),
wobei der mindestens eine Prozessor (1310) dazu konfiguriert ist, die Vielzahl von Anweisungen zu Folgendem auszuführen:
Erlangen (700) von Informationen (610), die sich auf eine Ausführungsumgebung einer vorinstallierten Mobile-Edge-Anwendung in einem Mobile-Edge-Computing-Host beziehen, wobei die erlangten Informationen, die sich auf eine Ausführungsumgebung beziehen, Anforderungsinformationen zur Ausführung der vorinstallierten Mobile-Edge-Anwendung umfassen;
Empfangen einer Installationsanforderung für eine neue Mobile-Edge-Anwendung, wobei die Anforderung Anforderungsinformationen umfasst, die sich auf eine Ausführungsumgebung der neuen Mobile-Edge-Anwendung beziehen;
Vergleichen der Anforderungsinformationen zur Ausführung der vorinstallierten Mobile-Edge-Anwendung mit den Anforderungsinformationen zur Ausführung der neuen Mobile-Edge-Anwendung;
basierend auf dem Vergleich, Bestimmen einer Ähnlichkeit zwischen der vorinstallierten Mobile-Edge-Anwendung und der neuen Mobile-Edge-Anwendung;
für den Fall, dass die Ähnlichkeit größer als ein erster vorbestimmter Wert ist, Bestimmen (710) des Mobile-Edge-Computing-Hosts, auf dem die vorinstallierte Mobile-Edge-Anwendung installiert ist, zum Installieren der neuen Mobile-Edge-Anwendung; und
Übertragen (720) der neuen Mobile-Edge-Anwendung an den bestimmten Mobile-Edge-Computing-Host.

2. Elektronische Vorrichtung (600) nach Anspruch 1, wobei die Informationen, die sich auf die Ausführungsumgebung beziehen, ferner eine Übertragungshistorie der vorinstallierten Mobile-Edge-Anwendung in dem Mobile-Edge-Computing-Host umfassen und der mindestens eine Prozessor (1310) ferner dazu konfiguriert ist, die Vielzahl von Anweisungen zu Folgendem auszuführen:
Bestimmen einer Stabilität der Ausführungsumgebung der vorinstallierten einen Mobile-Edge-Anwendung basierend auf Informationen einer Neuinstallationsfrequenz der vorinstallierten Mobile-Edge-Anwendung innerhalb des Mobile-Edge-Computing-Hosts, die in den Übertragungshistorieninformationen umfasst sind; und
für den Fall, dass die Stabilität größer als ein zweiter vorbestimmter Wert ist, Bestimmen des Mobile-Edge-Computing-Hosts, auf dem die vorinstallierte Mobile-Edge-Anwendung installiert ist, zum Installieren der neuen Mobile-Edge-Anwendung.

3. Elektronische Vorrichtung (600) nach Anspruch 1, wobei die Informationen, die sich auf die Ausführungsumgebung beziehen, ferner Informationen zu Netzwerküberlastung und verfügbaren Ressourcen des Mobile-Edge-Computing-Hosts der vorinstallierten Mobile-Edge-Anwendung umfassen und wobei der mindestens eine Prozessor (1310) ferner dazu konfiguriert ist, die Vielzahl von Anweisungen zu Folgendem auszuführen:
Bestimmen einer ungenutzten Ressource des Mobile-Edge-Computing-Hosts der vorinstallierten Mobile-Edge-Anwendung basierend auf den Informationen zu Netzwerküberlastung und verfügbaren Ressourcen; und
Bestimmen des Mobile-Edge-Computing-Hosts basierend auf der ungenutzten Ressource und den Anforderungsinformationen, die sich auf die Ausführungsumgebung der neuen Mobile-Edge-Anwendung beziehen.

4. Elektronische Vorrichtung (600) nach Anspruch 1, wobei der mindestens eine Prozessor (1310) ferner dazu konfiguriert ist, die Vielzahl von Anweisungen zu Folgendem auszuführen:
Digitalisieren der Informationen, die sich auf die Ausführungsumgebung beziehen, und der Anforderungsinformationen, die sich auf die Ausführungsumgebung der neuen Mobile-Edge-Anwendung beziehen, jeweils zu Daten; und
Bestimmen des Mobile-Edge-Computing-Hosts basierend auf den digitalisierten Daten.

5. Elektronische Vorrichtung (600) nach Anspruch 4, wobei der mindestens eine Prozessor (1310) ferner dazu konfiguriert ist, die Vielzahl von Anweisungen zu Folgendem auszuführen:
Erzeugen einer Datenvergleichsliste basierend auf den digitalisierten Daten; und
Bestimmen des Mobile-Edge-Computing-Hosts basierend auf der Datenvergleichsliste.

6. Elektronische Vorrichtung (600) nach Anspruch 1, wobei der mindestens eine Prozessor (1310) ferner dazu konfiguriert ist, die Vielzahl von Anweisungen zu Folgendem auszuführen:
Erlangen von Informationen, die sich auf die Anforderungsinformationen beziehen, die sich auf die Ausführungsumgebung der übertragenen neuen Mobile-Edge-Anwendung beziehen;
Bestimmen eines Mobile-Edge-Computing-Hosts zum Neuinstallieren der neuen Mobile-Edge-Anwendung basierend auf den Informationen, die sich auf die Ausführungsumgebung der vorinstallierten Mobile-Edge-Anwendung beziehen, und den Informationen, die sich auf die Ausführungsumgebung der übertragenen neuen Mobile-Edge-Anwendung beziehen; und
erneutes Übertragen der neuen Mobile-Edge-Anwendung an den bestimmten Mobile-Edge-Computing-Host.

7. Verfahren, durchgeführt durch eine elektronische Vorrichtung (600), zum Übertragen einer Mobile-Edge-Anwendung an einen bestimmten Mobile-Edge-Computing-Host, wobei das Verfahren Folgendes umfasst:
Erlangen (700) von Informationen, die sich auf eine Ausführungsumgebung einer vorinstallierten Mobile-Edge-Anwendung in einem Mobile-Edge-Computing-Host beziehen, wobei die erlangten Informationen, die sich auf eine Ausführungsumgebung beziehen, Anforderungsinformationen zur Ausführung der vorinstallierten Mobile-Edge-Anwendung umfassen;
Empfangen einer Installationsanforderung für eine neue Mobile-Edge-Anwendung, wobei die Anforderung Anforderungsinformationen umfasst, die sich auf eine Ausführungsumgebung der neuen Mobile-Edge-Anwendung beziehen;
Vergleichen der Anforderungsinformationen zur Ausführung der vorinstallierten Mobile-Edge-Anwendung mit den Anforderungsinformationen zur Ausführung der neuen Mobile-Edge-Anwendung;
basierend auf dem Vergleich, Bestimmen einer Ähnlichkeit zwischen der vorinstallierten Mobile-Edge-Anwendung und der neuen Mobile-Edge-Anwendung;
für den Fall, dass die Ähnlichkeit größer als ein erster vorbestimmter Wert ist, Bestimmen (710) des Mobile-Edge-Computing-Hosts, auf dem die vorinstallierte Mobile-Edge-Anwendung installiert ist, zum Installieren der neuen Mobile-Edge-Anwendung; und
Übertragen (720) der neuen Mobile-Edge-Anwendung an den bestimmten Mobile-Edge-Computing-Host.

8. Verfahren nach Anspruch 7, wobei die Informationen, die sich auf die Ausführungsumgebung beziehen, ferner eine Übertragungshistorie der vorinstallierten Mobile-Edge-Anwendung in dem Mobile-Edge-Computing-Host umfassen und das Bestimmen des Mobile-Edge-Computing-Hosts Folgendes umfasst:
Bestimmen einer Stabilität der Ausführungsumgebung der vorinstallierten Mobile-Edge-Anwendung basierend auf Informationen einer Neuinstallationsfrequenz der vorinstallierten Mobile-Edge-Anwendung innerhalb des Mobile-Edge-Computing-Hosts, die in Übertragungshistorieninformationen umfasst sind; und
für den Fall, dass die Stabilität größer als ein zweiter vorbestimmter Wert ist, Bestimmen des Mobile-Edge-Computing-Hosts, auf dem die vorinstallierte Mobile-Edge-Anwendung installiert ist, zum Installieren der neuen Mobile-Edge-Anwendung.

9. Verfahren nach Anspruch 7, wobei die Informationen, die sich auf die Ausführungsumgebung beziehen, ferner Informationen zu Netzwerküberlastung und verfügbaren Ressourcen des Mobile-Edge-Computing-Hosts der vorinstallierten Mobile-Edge-Anwendung umfassen und wobei das Bestimmen des Mobile-Edge-Computing-Hosts:
Bestimmen einer ungenutzten Ressource des Mobile-Edge-Computing-Hosts der mindestens einen vorinstallierten Mobile-Edge-Anwendung basierend auf den Informationen zu Netzwerküberlastung und verfügbaren Ressourcen; und
Bestimmen des Mobile-Edge-Computing-Hosts basierend auf der ungenutzten Ressource und den Anforderungsinformationen, die sich auf die Ausführungsumgebung der neuen Mobile-Edge-Anwendung beziehen.

10. Verfahren nach Anspruch 7, wobei das Bestimmen des Mobile-Edge-Computing-Hosts zum Installieren der neuen Mobile-Edge-Anwendung Folgendes umfasst:
Digitalisieren der Informationen, die sich auf die Ausführungsumgebung beziehen, und der Anforderungsinformationen, die sich auf die Ausführungsumgebung der neuen Mobile-Edge-Anwendung beziehen, jeweils zu Daten; und
Bestimmen des Mobile-Edge-Computing-Hosts basierend auf den digitalisierten Daten.

11. Verfahren nach Anspruch 10, wobei das Bestimmen des Mobile-Edge-Computing-Hosts basierend auf den digitalisierten Daten Folgendes umfasst:
Erzeugen einer Datenvergleichsliste basierend auf den digitalisierten Daten; und
Bestimmen des Mobile-Edge-Computing-Hosts basierend auf der Datenvergleichsliste.

12. Verfahren nach Anspruch 7, ferner umfassend:
Erlangen von Informationen, die sich auf die Ausführungsumgebung der übertragenen neuen Mobile-Edge-Anwendung beziehen;
Bestimmen eines Mobile-Edge-Computing-Hosts zum Neuinstallieren der neuen Mobile-Edge-Anwendung basierend auf den Informationen, die sich auf die Ausführungsumgebung der mindestens einen vorinstallierten Mobile-Edge-Anwendung beziehen, und den Informationen, die sich auf die Ausführungsumgebung der übertragenen neuen Mobile-Edge-Anwendung beziehen; und
erneutes Übertragen der neuen Mobile-Edge-Anwendung an den bestimmten Mobile-Edge-Computing-Host.

13. Computerlesbares Aufzeichnungsmedium, auf dem ein Programm zum Ausführen eines Verfahrens, das durch eine elektronische Vorrichtung (600) durchgeführt wird, zum Übertragen einer Mobile-Edge-Anwendung an einen bestimmten Mobile-Edge-Computing-Host aufgezeichnet ist, wobei das Verfahren Folgendes umfasst:
Erlangen von Informationen, die sich auf eine Ausführungsumgebung einer vorinstallierten Mobile-Edge-Anwendung in einem Mobile-Edge-Computing-Host beziehen, wobei die erlangten Informationen, die sich auf eine Ausführungsumgebung beziehen, Anforderungsinformationen zur Ausführung der vorinstallierten Mobile-Edge-Anwendung umfassen;
Empfangen einer Installationsanforderung für eine neue Mobile-Edge-Anwendung, wobei die Anforderung Anforderungsinformationen umfasst, die sich auf eine Ausführungsumgebung der neuen Mobile-Edge-Anwendung beziehen;
Vergleichen der Anforderungsinformationen zur Ausführung der vorinstallierten Mobile-Edge-Anwendung mit den Anforderungsinformationen zur Ausführung der neuen Mobile-Edge-Anwendung;
basierend auf dem Vergleich, Bestimmen einer Ähnlichkeit zwischen der vorinstallierten Mobile-Edge-Anwendung und der neuen Mobile-Edge-Anwendung;
für den Fall, dass die Ähnlichkeit größer als ein erster vorbestimmter Wert ist, Bestimmen des Mobile-Edge-Computing-Hosts, auf dem die vorinstallierte Anwendung installiert ist, zum Installieren der neuen Mobile-Edge-Anwendung; und
Übertragen der neuen Mobile-Edge-Anwendung an den bestimmten Mobile-Edge-Computing-Host.

## Revendications

1. Dispositif électronique (600) de détermination d'un hôte d'informatique en périphérie mobile, MEC, comprenant :
une mémoire (1330) stockant une pluralité d'instructions ; et
au moins un processeur (1310) ;
dans lequel l'au moins un processeur (1310) est configuré pour exécuter la pluralité d'instructions pour :
obtenir (700) des informations (610) relatives à un environnement d'exécution d'une application en périphérie mobile préinstallée dans un hôte d'informatique en périphérie mobile, dans lequel les informations obtenues relatives à un environnement d'exécution comprennent des informations d'exigence pour l'exécution de l'application en périphérie mobile préinstallée ;
recevoir une demande d'installation pour une nouvelle application en périphérie mobile, la demande comprenant des informations d'exigence liées à un environnement d'exécution de la nouvelle application en périphérie mobile ;
comparer les informations d'exigence pour l'exécution de l'application en périphérie mobile préinstallée aux informations d'exigence pour l'exécution de la nouvelle application en périphérie mobile ;
sur la base de la comparaison, déterminer la similitude entre l'application en périphérie mobile préinstallée et la nouvelle application en périphérie mobile ;
dans le cas où la similitude est supérieure à une première valeur prédéterminée, déterminer (710) l'hôte d'informatique en périphérie mobile où l'application en périphérie mobile préinstallée est installée pour installer la nouvelle application en périphérie mobile ; et
transmettre (720) la nouvelle application en périphérie mobile à l'hôte d'informatique en périphérie mobile déterminé.

2. Dispositif électronique (600) selon la revendication 1, dans lequel les informations relatives à l'environnement d'exécution comprennent en outre l'historique de transmission de l'application en périphérie mobile préinstallée dans l'hôte d'informatique en périphérie mobile, et l'au moins un processeur (1310) est en outre configuré pour exécuter la pluralité d'instructions pour :
déterminer la stabilité de l'environnement d'exécution de l'application en périphérie mobile qui est préinstallée, sur la base des informations d'une fréquence de réinstallation de l'application en périphérie mobile préinstallée dans l'hôte d'informatique en périphérie mobile, comprises dans les informations d'historique de transmission ; et
dans le cas où la stabilité est supérieure à une seconde valeur prédéterminée, déterminer l'hôte d'informatique en périphérie mobile où l'application en périphérie mobile préinstallée est installée pour installer la nouvelle application en périphérie mobile.

3. Dispositif électronique (600) selon la revendication 1, dans lequel les informations relatives à l'environnement d'exécution comprennent en outre des informations d'encombrement du réseau et de ressources disponibles de l'hôte d'informatique en périphérie mobile de l'application en périphérie mobile préinstallée, et dans lequel l'au moins un processeur (1310) est en outre configuré pour exécuter la pluralité d'instructions pour :
déterminer une ressource inactive de l'hôte d'informatique en périphérie mobile de l'application en périphérie mobile préinstallée, sur la base des informations d'encombrement du réseau et de ressources disponibles ; et
déterminer l'hôte d'informatique en périphérie mobile sur la base des informations de ressources inactives et d'exigence relatives à l'environnement d'exécution de la nouvelle application en périphérie mobile.

4. Dispositif électronique (600) selon la revendication 1, dans lequel l'au moins un processeur (1310) est en outre configuré pour exécuter les instructions pour :
numériser les informations relatives à l'environnement d'exécution et les informations d'exigence relatives à l'environnement d'exécution de la nouvelle application en périphérie mobile respectivement en données ; et
déterminer l'hôte d'informatique en périphérie mobile sur la base des données numérisées.

5. Dispositif électronique (600) selon la revendication 4, dans lequel l'au moins un processeur (1310) est en outre configuré pour exécuter la pluralité d'instructions pour :
générer une liste de comparaison de données sur la base des données numérisées ; et
déterminer l'hôte d'informatique en périphérie mobile sur la base de la liste de comparaison de données.

6. Dispositif électronique (600) selon la revendication 1, dans lequel l'au moins un processeur (1310) est en outre configuré pour exécuter les instructions pour :
obtenir des informations relatives aux informations d'exigence relatives à l'environnement d'exécution de la nouvelle application en périphérie mobile transmise ;
déterminer un hôte d'informatique en périphérie mobile pour réinstaller la nouvelle application en périphérie mobile, sur la base des informations relatives à l'environnement d'exécution de l'application en périphérie mobile préinstallée et des informations relatives à l'environnement d'exécution de la nouvelle application en périphérie mobile transmise ; et
retransmettre la nouvelle application en périphérie mobile à l'hôte d'informatique en périphérie mobile déterminé.

7. Procédé, réalisé par un dispositif électronique (600), de transmission d'une application de périphérie mobile à un hôte d'informatique en périphérie mobile déterminé, le procédé comprenant :
l'obtention (700) d'informations relatives à un environnement d'exécution d'une application en périphérie mobile préinstallée dans un hôte d'informatique en périphérie mobile, dans lequel les informations obtenues relatives à un environnement d'exécution comprennent des informations d'exigence pour l'exécution de l'application en périphérie mobile préinstallée ;
la réception d'une demande d'installation pour une nouvelle application en périphérie mobile, la demande comprenant des informations d'exigence relatives à un environnement d'exécution de la nouvelle application en périphérie mobile ;
la comparaison des informations d'exigence pour l'exécution de l'application en périphérie mobile préinstallée aux informations d'exigence pour l'exécution de la nouvelle application en périphérie mobile ;
sur la base de la comparaison, la détermination de la similitude entre l'application en périphérie mobile préinstallée et la nouvelle application en périphérie mobile ;
dans le cas où la similitude est supérieure à une première valeur prédéterminée, la détermination (710) de l'hôte d'informatique en périphérie mobile où l'application en périphérie mobile préinstallée est installée pour installer la nouvelle application en périphérie mobile ; et
la transmission (720) de la nouvelle application en périphérie mobile à l'hôte d'informatique en périphérie mobile déterminé.

8. Procédé selon la revendication 7, dans lequel les informations relatives à l'environnement d'exécution comprennent en outre l'historique de transmission de l'application de périphérie mobile préinstallée dans l'hôte d'informatique en périphérie mobile, et la détermination de l'hôte d'informatique en périphérie mobile comprend :
la détermination de la stabilité de l'environnement d'exécution de l'application en périphérie mobile préinstallée, sur la base des informations d'une fréquence de réinstallation de l'application en périphérie mobile préinstallée dans l'hôte d'informatique en périphérie mobile, comprises dans les informations d'historique de transmission ; et
dans le cas où la stabilité est supérieure à une seconde valeur prédéterminée, la détermination de l'hôte d'informatique en périphérie mobile où l'application en périphérie mobile préinstallée est installée pour installer la nouvelle application en périphérie mobile.

9. Procédé selon la revendication 7, dans lequel les informations relatives à l'environnement d'exécution comprennent en outre des informations d'encombrement du réseau et de ressources disponibles de l'hôte d'informatique en périphérie mobile de l'application de périphérie mobile préinstallée, et dans lequel la détermination de l'hôte d'informatique en périphérie mobile :
la détermination d'une ressource inactive de l'hôte d'informatique en périphérie mobile de l'au moins une application en périphérie mobile préinstallée, sur la base des informations d'encombrement du réseau et de ressources disponibles ; et
la détermination de l'hôte d'informatique en périphérie mobile sur la base des informations de ressources inactives et d'exigence relatives à l'environnement d'exécution de la nouvelle application en périphérie mobile.

10. Procédé selon la revendication 7, dans lequel la détermination de l'hôte d'informatique en périphérie mobile pour installer la nouvelle application de périphérie mobile comprend :
la numérisation des informations relatives à l'environnement d'exécution et des informations d'exigence relatives à l'environnement d'exécution de la nouvelle application en périphérie mobile respectivement en données ; et
la détermination de l'hôte d'informatique en périphérie mobile sur la base des données numérisées.

11. Procédé selon la revendication 10, dans lequel la détermination de l'hôte d'informatique en périphérie mobile sur la base des données numérisées comprend :
la génération d'une liste de comparaison de données sur la base des données numérisées ; et
la détermination de l'hôte d'informatique en périphérie mobile sur la base de la liste de comparaison de données.

12. Procédé selon la revendication 7, comprenant en outre :
l'obtention d'informations relatives à l'environnement d'exécution de la nouvelle application en périphérie mobile transmise ;
la détermination d'un hôte d'informatique en périphérie mobile pour réinstaller la nouvelle application en périphérie mobile, sur la base des informations relatives à l'environnement d'exécution de l'au moins une application en périphérie mobile préinstallée et des informations relatives à l'environnement d'exécution de la nouvelle application en périphérie mobile transmise ; et
la retransmission de la nouvelle application en périphérie mobile à l'hôte d'informatique en périphérie mobile déterminé.

13. Support d'enregistrement lisible par ordinateur sur lequel est enregistré un programme d'exécution d'un procédé, réalisé par un dispositif électronique (600), de transmission d'une application de périphérie mobile à un hôte d'informatique en périphérie mobile déterminé, le procédé comprenant :
l'obtention d'informations relatives à un environnement d'exécution d'application en périphérie mobile préinstallée dans un hôte d'informatique en périphérie mobile,
dans lequel les informations obtenues relatives à un environnement d'exécution comprennent des informations d'exigence pour l'exécution de l'application en périphérie mobile préinstallée ;
la réception d'une demande d'installation pour une nouvelle application en périphérie mobile, la demande comprenant des informations d'exigence relatives à un environnement d'exécution de la nouvelle application en périphérie mobile ;
la comparaison des informations d'exigence pour l'exécution de l'application en périphérie mobile préinstallée aux informations d'exigence pour l'exécution de la nouvelle application en périphérie mobile ;
sur la base de la comparaison, la détermination de la similitude entre l'application en périphérie mobile préinstallée et la nouvelle application en périphérie mobile ;
dans le cas où la similitude est supérieure à une première valeur prédéterminée,
la détermination de l'hôte d'informatique en périphérie mobile où l'application préinstallée est installée pour installer la nouvelle application en périphérie mobile ; et
la transmission de la nouvelle application en périphérie mobile à l'hôte d'informatique en périphérie mobile déterminé.
